(19) Europäisches Patentamt

European Patent Office

Office européen des brevets

(11) **EP 0 688 588 B1**

(12) **FASCICULE DE BREVET EUROPEEN**

(45) Date de publication et mention
de la délivrance du brevet:
**24.05.2000   Bulletin 2000/21**

(51) Int Cl.⁷: **B01D 15/02**

(21) Numéro de dépôt: **95401407.2**

(22) Date de dépôt: **15.06.1995**

(54) **Procédé de séparation par chromatographie en lit mobile simulé avec correction de volume mort par augmentation de débit**

Trennverfahren mittels simulierter Wanderbettchromatographie mit Korrektur des Totvolumens durch erhöhte Förderleistung

Separation process by simulated moving bed chromotography with correction for dead volume by increasing feed

(84) Etats contractants désignés:
**BE CH DE ES GB IT LI NL**

(30) Priorité: **22.06.1994  FR 9407762**

(43) Date de publication de la demande:
**27.12.1995   Bulletin 1995/52**

(73) Titulaire: **INSTITUT FRANCAIS DU PETROLE**
**92502 Rueil-Malmaison (FR)**

(72) Inventeurs:
• **Hotier, Gérard**
**F-92500 Rueil Malmaison (FR)**
• **Couenne, Nicolas**
**F-69009 Lyon (FR)**
• **Cohen, Choua**
**F-69009 Lyon (FR)**
• **Toussaint, Jean-Michel**
**F-92600 Asnieres (FR)**

(56) Documents cités:
**EP-A- 0 415 821          WO-A-91/08815**
**FR-A- 2 690 630**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention est relative à un procédé de fractionnement de mélanges fluides de composants, effectué par une méthode de chromatographie.

Elle s'applique notamment à la séparation des hydrocarbures aromatiques à huit atomes de carbone.

La chromatographie est basée sur le fait suivant : certains solides poreux, en présence de mélanges liquides, gazeux ou supercritiques ont la propriété de retenir plus ou moins fortement les différents constituants du mélange. Les procédés de séparation basés sur la chromatographie sont le plus souvent mis en oeuvre de la manière suivante : le solide poreux, de granulométrie déterminée est contenu dans un récipient généralement cylindrique, la colonne ; il constitue la phase stationnaire. Le mélange à séparer est percolé sur la colonne, les différents constituants sortent successivement selon qu'ils sont retenus plus ou moins fortement par la phase stationnaire.

L'art antérieur est illustré par le brevet EP-A-0415821 qui décrit la séparation d'un mélange d'au moins trois constituants en trois effluents au moyen de deux solvants. Le brevet FR-A-2690630 décrit un fractionnement chromatographique de mélanges par un éluant à pression supercritique. Le brevet WO-A-9108815 décrit un procédé de contrôle de débits de fluides circulant dans un lit mobile simulé.

Le procédé de séparation concerné par cette invention est le procédé par chromatographie en lit mobile simulé, à contre-courant ou à co-courant, tel que décrit notamment dans les brevets US-A-2985589, US-A-4402832 ef US-A-4498991. Aucun de ces brevets ne décrit ni ne suggère la façon dont on peut s'affranchir des perturbations causées par les volumes morts sur la boucle de recyclage.

L'invention est illustrée par les figures suivantes, parmi lesquelles :

- la figure 1 montre le principe d'une séparation en contre-courant réel,
- les figures 2A, 2B, 2C montrent le fonctionnement d'un contre-courant simulé,
- la figure 3 montre un lit mobile simulé où la pompe de recyclage est solidaire du $n^{ème}$ lit ou tronçon de colonne,
- la figure 4 montre les variations de composition C (% poids) d'échantillons d'extrait prélevés au même instant de chacune des périodes T du cycle en fonction du numéro de période dans le cycle (modulo 24),
- la figure 5 montre les variations de la composition moyenne C (% poids) de l'extrait pour chacune des périodes du cycle en fonction du numéro de période NP dans le cycle, sans compensation de volume mort, et
- la figure 6 montre les variations de la composition moyenne C (% poids) de l'extrait pour chacune des périodes du cycle en fonction du numéro de période NP dans le cycle, lorsque la compensation selon l'invention est appliquée.

Une manière d'expliquer le fonctionnement d'un procédé de séparation par chromatographie en lit mobile simulé consiste à le représenter par un contre-courant réel équivalent.

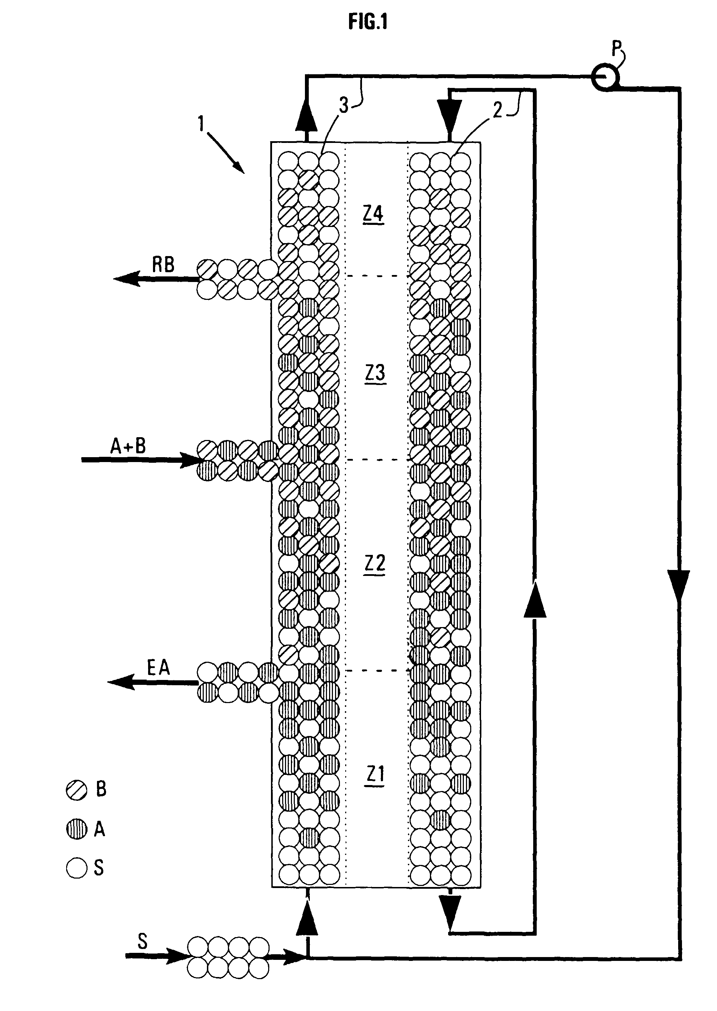

Dans le contre-courant réel, représenté par la figure 1 avec quatre zones Z1, Z2, Z3 et Z4, un profil des concentrations fixe et constant se développe dans une colonne 1 de séparation, où la position des points d'injection d'une charge A + B , d'un éluant S et de soutirage d'un extrait EA et d' un raffinat RB reste fixe, tandis que le solide adsorbant 2 et le liquide 3 se déplacent à contre-courant. Dans ce procédé, une pompe P de recyclage permet de renvoyer le liquide du point haut au point bas de la colonne, tandis qu'un système tel qu'un lit entraîné, par exemple, permet de renvoyer le solide du point bas au point haut. Ces deux systèmes occupent vis-à-vis du profil de concentration le point où la seule espèce présente tant dans le liquide que dans le solide est l'éluant d'élution. Ce point se rencontre à la jonction des zones I et IV (voir figure 1). Dans cette situation, les volumes de liquide et de solide engagés dans les systèmes de recyclage sont strictement indifférents puisque, seule une espèce étant présente, les effets de rétromélange (backmixing) sont sans conséquence.

Le succès des procédés de séparation par chromatographie en lit mobile simulé tient à la difficulté de faire correctement circuler un solide sans créer d'attrition et sans augmenter considérablement la porosité de lit par rapport à un lit fixe. Dans les procédés en lit mobile simulé, le solide est disposé dans un certain nombre n de lits fixes, dans la pratique n est en général compris entre quatre et vingt-quatre. La différence majeure entre les procédés en contre-courant réel et ceux en lit mobile simulé tient au fait que dans ces derniers, le profil des concentrations n'est plus fixe mais qu'il se déplace à vitesse uniforme tout autour d'une boucle fermée constituée des n lits fixes ou colonnes chromatographiques disposés en série et telle que la sortie du $n^{ème}$ lit fixe soit reliée à l'entrée du premier.

On doit alors considérer deux cas de procédés en lit mobile simulé suivant la manière dont est reliée la pompe de recyclage (pour les liquides et les fluides supercitiques assez denses pour être pompés) ou le compresseur de recyclage (pour les gaz et les fluides supercritiques non pompables) qui permet d'assurer la circulation liquide dans la boucle des n lits fixes :

A) Dans un premier cas, chaque lit fixe est contenu dans une colonne individuelle et la pompe de recyclage peut se déplacer d'une jonction de colonne à la suivante à la même cadence que celles des points d'injection et de soutirage des fluides entrants et sortants. Dans ce cas (décrit dans les brevets US 5093004 et WO 93/22022 ), le volume de la ligne amenant le fluide de la sortie d'une colonne à l'entrée de la pompe de recyclage, le volume de la pompe elle-même et le volume de la ligne amenant le fluide du refoulement de la pompe à l'entrée de la colonne suivante (le total de ces trois termes constituant le volume de la boucle de recyclage) sont, comme dans le cas du contre-courant réel, sans conséquence puisque l'on s'arrange pour que ces volumes ne soient occupés que par de l'éluant pur .

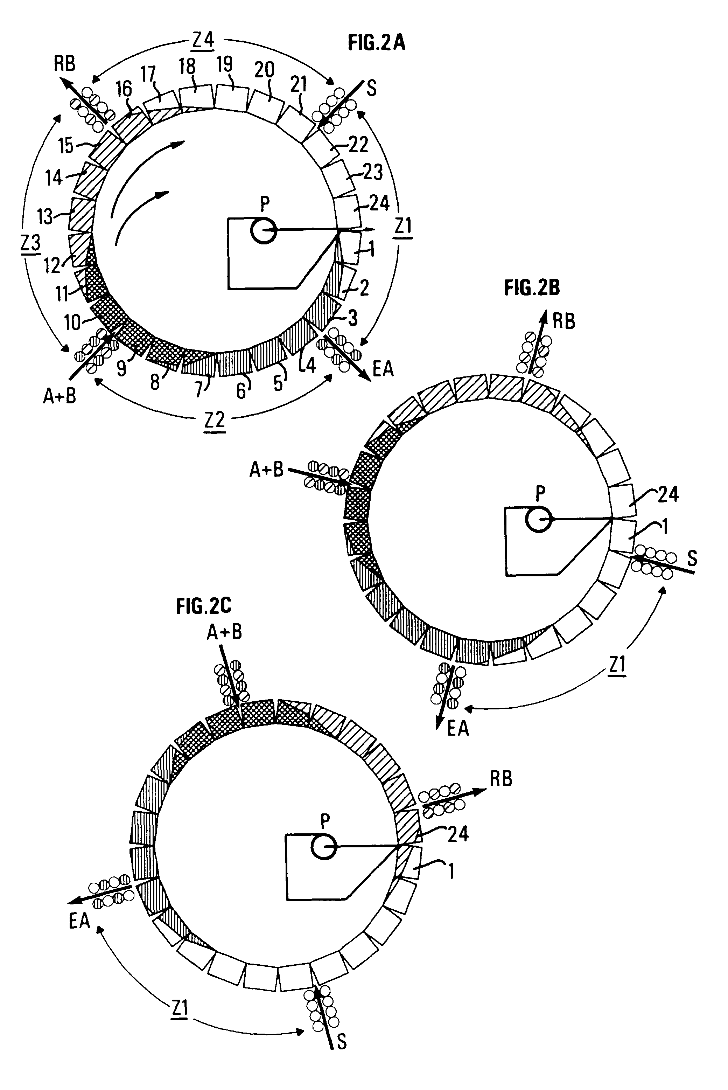

B) Dans un second cas, chaque lit fixe ou tronçon de colonne chromatographique est relié au suivant par une ligne ne pouvant aller que vers ce lit suivant (en particulier quand plusieurs lits fixes sont situés dans la même colonne) sauf le $n^{\text{ème}}$ dont la sortie est reliée à l'aspiration de la pompe P de recyclage, ladite pompe ayant son refoulement connecté au premier des lits fixes (voir Figures 2). Naturellement la numérotation de ces tronçons de colonne est purement arbitraire par convention on considére que le premier a son entrée reliée au refoulement de la pompe de recyclage et que le dernier ou $n^{\text{ème}}$ a sa sortie reliée à l'aspiration de ladite pompe . Dans ce cas, la pompe de recyclage verra passer l'ensemble du profil des concentrations. Le volume mort de cette pompe crée une anisotropie du volume du $n^{\text{ème}}$ lit fixe par rapport aux autres et il en résulte une perturbation des compositions de l'extrait et du raffinat, ce qui entraîne une baisse de pureté et de rendement. De manière générale pour minimiser l'ensemble des volumes morts de la boucle, on s'arrange pour que les lignes de jonction entre les différentes colonnes soient toutes de même volume, ce volume étant de plus réduit au minimum indispensable. Lorsque le fluide dans le système est un gaz recyclé par un compresseur, la perturbation observée est beaucoup plus faible que celle obtenue dans le cas d'un liquide ou d'un fluide supercritique pompable . Pour les gaz à faible pression, ladite perturbation est tout à fait négligeable .

Pour que le procédé fonctionne, il faut un débit différent dans chacune des zones et donc que la pompe (ou le compresseur) de recyclage adopte au cours d'un cycle au moins quatre débits différents . Les changements de consigne de la pompe de recyclage (régulée en débit) ont lieu à chaque fois qu'un des flux entrant ou sortant de la boucle passe d'une position immédiatement antérieure à une position immédiatement postérieure à la pompe de recyclage . Ainsi, lorsque l'injection de l'éluant S passe de la connexion antérieure à la connexion postérieure à la pompe de recyclage, la consigne de cette dernière devient D4 (le débit en zone 4 ). Puis lorsque le soutirage du raffinat RB passe de la connexion antérieure à la connexion postérieure à la pompe de recyclage, la consigne de cette dernière devient D3 (le débit en zone 3 ), avec D3 = D4 + R où R représente le débit de raffinat . Puis lorsque l'injection de charge A+B passe de la connexion antérieure à la connexion postérieure à la pompe de recyclage, la consigne de cette dernière devient D2 (le débit en zone 2 ), avec D2 = D4 + R - C où C représente le débit de charge . Enfin lorsque le soutirage d'extrait EA passe de la connexion antérieure à la connexion postérieure à la pompe de recyclage, la consigne de cette dernière devient D1 (le débit en zone 1), avec D1 = D4 + S où S représente le débit de l'éluant.

De manière simplifiée, l'unité peut être représentée comme un ensemble de segments qui, de manière souhaitable seraient tous de même longueur L (ces segments symbolisent les tronçons de colonne). Cependant, à l'un de ces segments on est obligé de rajouter une longueur $\ell$ (c'est ce $\ell$ qui symbolise le volume mort de la boucle de recyclage). Lorsque l'unité est en fonctionnement, un point se déplace le long de ces segments avec une vitesse constante u. Le point dispose d'un temps θ pour parcourir l'ensemble des n segments et le fonctionnement est optimum lorsque les jonctions des segments sont franchies de manière synchronisée sur des temps multiples de θ/n. Dans le cas idéal (n segments de longueur L) on aurait T = θ/n = L/u dans le cas d'une unité réelle on se fixe T et θ en négligeant $\ell$ . La longueur totale à parcourir est non plus n.L mais n.L + $\ell$; pendant chacune des périodes T, le point parcourt L + $\ell$/n alors qu'il devrait parcourir L pendant les n-1 premières périodes et L + $\ell$ pendant la dernière. Le passage du point aux jonctions des segments n'est plus synchronisé à chaque temps multiple de T mais uniquement aux temps multiples de θ. Pour arriver à cette schématisation, il suffit de diviser le volume V de chacun des tronçons, le volume mort de la boucle de recyclage v et le débit Di dans les tronçons par la section desdits tronçons pour obtenir respectivement L, $\ell$ et u.

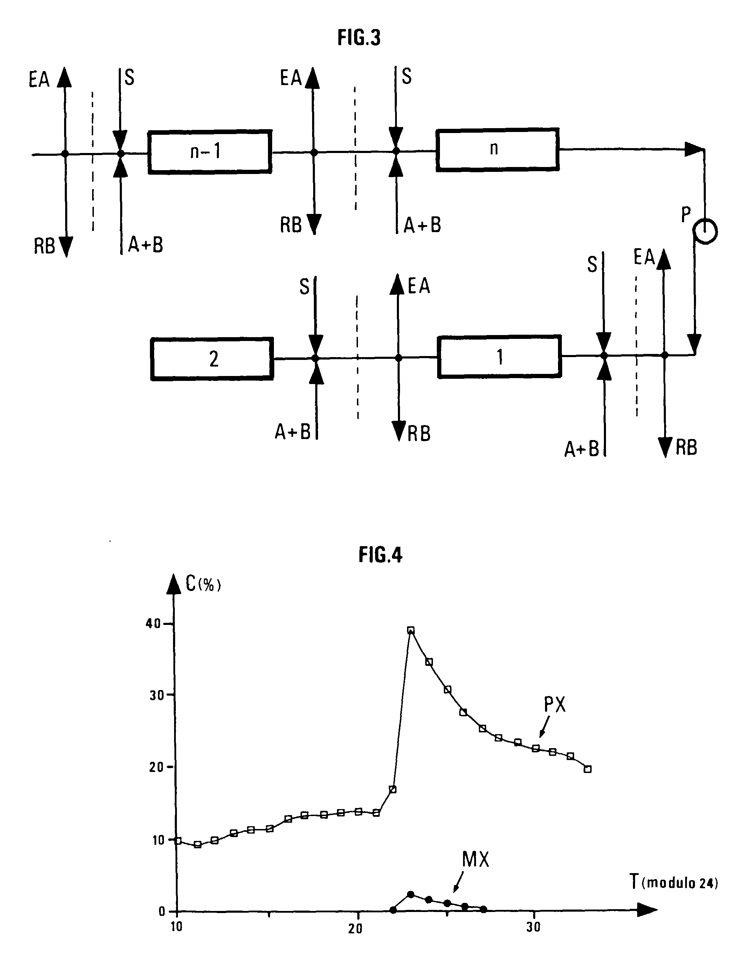

En figure 4, on présente un exemple de la perturbation causée par le volume de la boucle de recyclage sur la composition instantanée de l'extrait prise au même moment de chaque période , période par période, dans un lit mobile simulé à 4 zones et 24 tronçons. Si l'on observe sur plusieurs cycles successifs, on voit que la perturbation admet une périodicité de 24 périodes soit 1 cycle (Proceedings of the 9 th international symposium on preparative chromatography, Nancy april 1992, Balannec-Hotier).

Un premier objet de l'invention, lorsque le mélange est un liquide ou un fluide supercritique pompable, est de remédier à la perturbation de la composition de l'extrait causée par le volume mort de la pompe de recyclage situé entre le $n^{\text{ème}}$ et le premier lit .

Un second objet de l'invention, lorsque le mélange est un gaz sous pression ou un fluide supercritique peu dense, est de remédier à la perturbation de la composition de l'extrait causée par le volume mort du compresseur de recyclage situé entre le $n^{\text{ème}}$ et le premier lit .

Plus généralement, l'objet de l'invention est de remédier aux perturbations de la composition de l'extrait causées par les volumes morts de divers appareils situés entre deux lits consécutifs de la boucle.

Un autre l'objet de l'invention est de remédier aux perturbations de la composition du raffinat causées par les volumes morts de divers appareils situés entre deux lits consécutifs de la boucle, lorsque bien entendu on souhaite que la composition du raffinat au lieu de celle de l'extrait soit la plus constante possible.

De façon plus précise, l'invention concerne un procédé de séparation en lit mobile simulé comportant les étapes et les moyens tels que définis dans la revendication 1, avec tout mode préféré tel que défini dans les revendications dépendantes.

Selon un autre mode de mise en oeuvre concernant la séparation d'un mélange gazeux sous pression ou d'un fluide supercritique peu dense, l'invention concerne un procédé de séparation en lit mobile simulé comportant les étapes et les moyens tel que définis dans la revendication 2, avec tout mode préféré tel que défini dans les revendications dépendantes.

Pour des raisons de commodité, on considère par exemple, que la pompe de recyclage régulée en débit se situe arbitrairement entre les colonnes n et 1 et que le constituant recherché se trouve majoritairement dans l'extrait . Le problème consiste donc, en adoptant la schématisation décrite plus haut, à rétablir une situation telle que le point arrive à la fin de chaque segment à la fin de chacune des périodes de cycle de durée totale $\theta$. Le moyen que l'on propose consiste à augmenter la vitesse du point de u à u + $\Delta$u lorsque le point est en train de parcourir le $n^{\text{ème}}$ segment de longueur L + $\ell$ de telle manière que l'on ait L/u = (L + $\ell$)/(u + $\Delta$u) = T. Ce segment est donc parcouru en un temps T, dans le cas le plus simple où un seul volume mort ( celui de la pompe de recyclage ) est présent dans la boucle. Cette solution est aisément généralisable lorsque plusieurs segments présentent une longueur différente de L.

Selon une première variante où seule la pompe de recyclage située entre les colonnes n et 1 présente un volume mort, on réalise cette correction de manière pratique en adoptant un débit plus élevé au moment où le point de soutirage d'extrait passe de la sortie du tronçon n-1 à la sortie du tronçon n. La valeur du débit en zone 1 au lieu d'être $D_1$ en l'absence de correction, sera

$$D'_1 = D_1 \left( 1 + \frac{v}{\varepsilon V} \right)$$

où $\varepsilon$ est un coefficient compris entre $\varepsilon b$ et 1, $\varepsilon b$ représentant le total exprimé en fraction volumique d'une colonne des porosités intergrain (de lit ) et de grain, v est le volume mort de la boucle de recyclage, V est le volume d'un tronçon de colonne vide et de sa liaison vers le tronçon suivant. $\varepsilon$ dépend naturellement de l'isotherme d'adsorption compétitif des différents constituants en présence et de la phase fixe, en particulier de sa capacité d'adsorption, sa valeur change également selon que l'on compense la perturbation du raffinat ou celle de l'extrait. Cette correction corrige la perturbation dans l'extrait mais une même perturbation se produit au moment où le raffinat passe le volume de la boucle de recyclage ; une correction identique n'est toutefois pas souhaitable car elle provoque une augmentation du débit dans toute la boucle et donc un décalage du débit dans le tronçon où l'extrait est en train d'être prélevé.

Selon une deuxième variante, le mélange fluide peut être un gaz sous pression ou un fluide supercritique peu dense . Dans ce cas, il est véhiculé par un compresseur régulé en débit, alors le terme correctif peut être atténué en le multipliant par le rapport des densités de la phase fluide df à la phase adsorbée da.

Plus généralement, si l'on utilise, comme c'est souvent le cas, une pompe de recyclage sous contrôle de débit et une ou plusieurs pompes de recyclage sous contrôle de pression, le problème des deux ou plusieurs anisotropies se trouve résolu de la même manière, en augmentant le débit de recyclage $D_i$ à chaque fois que le soutirage d'extrait (lorsque le constituant recherché se situe majoritairement dans l'extrait) passe d'une connexion à la boucle de recyclage située avant un volume mort ou anisotropie, à une connexion à boucle de recyclage située immédiatement en aval de ce volume mort ou anisotropie.

Bien que la principale cause de l'injection de volumes morts dans un appareil de chromatographie en lit mobile simulé soit la ou les pompes ou compresseurs de recyclage, l'introduction d'autres appareils entre deux colonnes particulières produiront les mêmes effets : on peut citer un certain nombre d'appareils de mesure ou d'échantillonnage tels que débitmètres, cuve de spectromètre pour mesure en ligne de composition, by-pass ou boucle d'échantillonnage. Chaque anisotropie particulière, donc chaque volume mort induit par l'introduction d'un appareillage particulier, peut être compensée en augmentant le débit dans la boucle de recyclage lorsque le soutirage d'extrait (si c'est le cas) passe de la connexion amont à la connexion située en aval de l'anisotropie. Ce débit corrigé est augmenté selon la relation

$$D'_i = D_i \left( 1 + \frac{v}{\varepsilon\ V} \right),$$

avec $D'_i$ le débit corrigé en zone i et $D_i$ le débit de la pompe dans la zone i lorsqu'on néglige le volume mort. Comme indiqué ci-avant, les débits sont ensuite ramenés aux valeurs qui auraient été appliquées si les volumes morts avaient été négligés. Dans le cas du mélange gazeux sous pression, ou d'un fluide supercritique peu dense, le terme correctif est multiplié par le rapport df sur da comme indiqué plus haut.

Les figures 2A, 2B et 2C représentent un schéma de fonctionnement d'un dispositif à contre courant simulé où le liquide et le déplacement des commutations s'effectuent dans le même sens (sens des aiguilles d'une montre) . Le dispositif comprend 24 colonnes chromatographiques contenant l'adsorbant, connectées les unes aux autres, la colonne 24 (n) et la colonne 1 étant reliées par l'intermédiaire d'une pompe fixe de recyclage P . La zone 1 est délimitée entre une injection d'éluant S et un soutirage d'extrait EA, la zone 2 entre le soutirage d'extrait et l'injection de charge A+B, la zone 3 entre l'injection de charge A+B et le soutirage de raffinat RB et la zone 4 entre le soutirage de raffinat et l'injection d'éluant. A la fin de chaque période, les courants d'injection et de soutirage sont permutés.

La figure 3 montre la succession des tronçons de colonne n, de soutirage d'extrait EA, de raffinat RB, d'injection de la charge A+B et d'éluant S entre deux tronçons . De plus cette figure montre un agencement particulier où la pompe de recyclage et/ou le moyen de mesure sont situés immédiatement en amont du soutirage du courant d'extrait EA ou de raffinat RB, ces derniers se situant en amont du lit 1. Dans ce cas, c'est lorsque le soutirage d'extrait passe de la sortie du n-1ème à celle du nème lit qu'il faut augmenter le débit dans la boucle de recyclage.

Selon une variante non illustrée, les points de soutirage du nème lit et d'injection dans le premier peuvent se trouver entre le nème lit et la pompe de recyclage ; dans ce cas c'est lorsque la connexion de l'extrait passe du nème lit au premier qu'il faut augmenter le débit dans la boucle de recyclage.

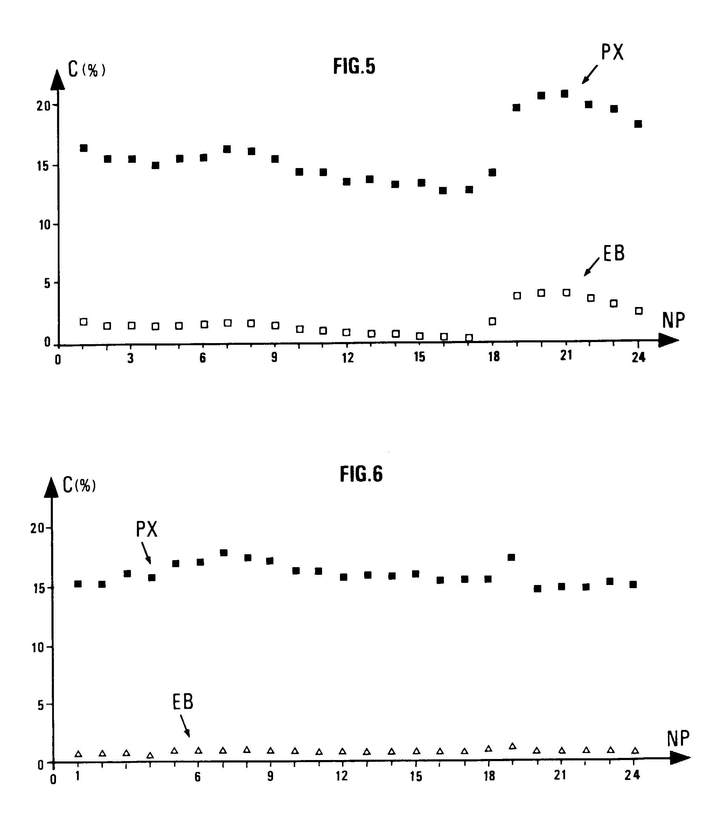

L'exemple qui suit illustre l'invention sans toutefois en limiter l'application la figure 5 présente la composition de l'extrait période par période sans aucune compensation de volume mort, la figure 6 présente le même diagramme lorsque la compensation est effectuée en augmentant le débit de recyclage lorsque le point de soutirage de l'extrait passe de l'avant-dernier tronçon au dernier .

Exemple 1A(comparatif)

Selon l'art antérieur, on sépare une charge ayant pour composition : ethylbenzène (EB) 12,07%, paraxylène (PX) 22,95%, ortho plus métaxylène (OX + MX) 64,98 %, sur une unité constituée de 24 colonnes de 1 m de longueur et 1 cm de diamètre, opérée en lit mobile simulé à contre-courant . Les lignes et la pompe intercalées entre les colonnes 24 et 1 créent un volume mort de 17,25 $cm^3$. Les débits respectifs de la charge, de l'éluant constitué de toluène sensiblement pur, de l'extrait et du raffinat sont de 1,42 $cm^3$/min, 2,45 $cm^3$/min, 2,05 $cm^3$/min et 1,82 $cm^3$/min . L'adsorbant est une zéolithe Y échangée baryum et potassium telle que celle correspondant à la référence SPX 2000 de la société CECA (France) Les colonnes se répartissent comme suit : 5 en zone 4, 4 en zone 3, 7 en zone 2 et 8 en zone 1. Les débits de la pompe de recyclage sont 5 fois en zone 4, 9,1 $cm^3$/min, 4 fois en zone 3, 10,92 $cm^3$/min, 7 fois en zone 2, 9,5 $cm^3$/min et 8 fois en zone 1, 11,55 $cm^3$/min. La période de permutation est de cinq minutes. Pendant la première période du cycle, l'éluant est injecté à l'entrée de la colonne n°1, l'extrait est prélevé à la sortie de la colonne n°8, la charge est injectée à l'entrée de la colonne n°16 et le raffinat est prélevé à la sortie de la colonne n°19. La pureté moyenne obtenue pour le paraxylène dans l'extrait est de 90,70 % et le rendement de 99,90 %. On voit surtout, figure 5, que les compositions d'extrait mesurées période par période sont très variables.

Exemple 1B

Selon l'invention, tous les paramètres restant par ailleurs égaux, on impose à la pompe de recyclage les débits suivants : 5 fois en zone 4, 9,1 $cm^3$/min, 4 fois en zone 3, 10,92 $cm^3$/min, 7 fois en zone 2, 9,5 $cm^3$/min, 1 fois en zone 1, correspondant à la correction 15 $cm^3$/min., 7 fois en zone 1, 11,55 $cm^3$/min. La pureté moyenne obtenue est cette fois de 95,54 %, le rendement est de 98,7 % pour le paraxylène dans l'extrait. On voit surtout (figure 6) que les compositions d'extrait prises période par période restent très proches les unes des autres la différence maximale est divisée par quatre. On constate donc que la correction est appliquée uniquement pendent la 17ème période du cycle, lorsque L'extrait est prélevé à la sortie de la colonne 24. Pendant cette période particulière, il est à noter que les débit dans les quatre zones sont modifiés : le débit en zone 1 est $D'_1$= 15 $cm^3$/min, alors que pendant les 23 autres périodes le débit $D_1$ est 11,55 $cm^3$/min, le débit en zone 2 est $D'_2$= 12,95 $cm^3$/min, alors que pendant les 23 autres périodes le débit $D_2$ est 9,5 $cm^3$/min, le débit en zone 3 est $D'_3$ = 14,37 $cm^3$/min, alors que pendant les 23 autres

périodes le débit $D_3$ est 10,92cm$^3$/min, le débit en zone 4 est $D'_4$ = 12,55 cm$^3$/min, alors que pendant les 23 autres périodes le débit $D_4$ est 9.1 cm$^3$/min. Le débit $D'_1$ = 15 cm$^3$/min est bien compris entre

$$D_1\left(1 + \frac{v}{V}\right)$$

(avec $D_1$ = 11,55 cm$^3$/min, v = 17,25 cm$^3$, V = 78,5 cm$^3$ ) soit 14,09 cm$^3$/min et

$$D_1\left(1 + \frac{v}{\varepsilon b\ V}\right)$$

(avec $\varepsilon b$ = 0,58 soit 0,33 pour la porosité de lit et 0,25 pour la porosité de grain) soit 15,92 cm$^3$/min

Exemple 1C

Outre la pompe de recyclage entre le premier et le 24$^{ème}$ lit, on intercale entre les 12$^{ème}$ et 13$^{ème}$ lits un spectrophotomètre dont le volume mort v' représente 8 cm3, ces 8 cm3 seront comme la pompe de la figure 3 considérés comme solidaires de la colonne 12 . Les débits imposés à la pompe de recyclage seront alors les suivants : 4 fois en zone 4, 9,1 cm$^3$/min, 1 fois en zone 4 10,35 cm$^3$/min correspondant à la correction pour l'appareil de mesure précité, 4 fois en zone 3, 10,92 cm$^3$/min, 7 fois en zone 2, 9,5 cm$^3$/min, 1 fois en zone 1, 15 cm$^3$/min., correspondant à la correction pour la pompe de recyclage, 7 fois en zone 1, 11,55 cm$^3$/min. On constate qu'en plus de la première correction déjà explicitée une seconde intervient uniquement pendant la 5$^{ème}$ période du cycle, lorsque l'extrait est prélevé à la sortie de la colonne 12 . Comme précédemment les débits dans les quatre zones seront alors modifiés, on a $D'_1$ = 12,80 cm$^3$/min, $D'_2$ = 10,75 cm$^3$/min, $D'_3$ = 12,17 cm$^3$/min, $D'_4$ = 10,35 cm$^3$/min . Le débit $D'_4$ est bien compris entre

$$D_4\left(1 + \frac{v}{V}\right)$$

soit 10,03 cm$^3$/min et

$$D_4\left(1 + \frac{v}{\varepsilon b\ V}\right)$$

soit 10,7 cm$^3$/min.

**Revendications**

1. Procédé de séparation en lit mobile simulé, à partir d'une charge (A + B) d'au moins deux constituants, en présence d'au moins un éluant (S), en au moins deux fractions, comportant n colonnes ou tronçons de colonnes chromatographiques montées en série et en boucle fermée, dans lesquelles circule un mélange liquide ou supercritique, la boucle présentant au moins un courant d' injection de la charge, au moins un courant d'injection de l'éluant, au moins un courant de soutirage d'un extrait (EA) et au moins un courant de soutirage d'un raffinat (RB), le constituant préférentiellement recherché se trouvant en majorité soit dans l'extrait soit dans le raffinat, quatre zones au moins étant déterminées dans lesdites colonnes, chaque zone étant séparée de la suivante par un courant d'injection ou de soutirage, les courants d'injection et de soutirage étant permutés simultanément et à intervalles de temps sensiblement constants, la boucle fermée comportant une pompe de recyclage dudit mélange, régulée en débit, et située entre deux colonnes ou tronçons de colonne successifs, éventuellement au moins un moyen de mesure ou d'échantillonnage et éventuellement au moins une pompe de recyclage régulée en pression, ledit moyen de mesure ou d'échantillonnage et/ou la pompe (P) de recyclage régulée en pression étant chacun situé entre deux colonnes ou tronçons de colonne consécutifs, lesdites pompes, et lesdits moyens de mesure ou d'échantillonnage éventuellement présents, présentant chacun un volume mort dans la boucle de recyclage qui entraîne des perturbations dans la composition de l'extrait et dans celle du raffinat, le procédé étant caractérisé en ce que l'on augmente d'abord le débit de la pompe de recyclage régulée en débit chaque fois que l'on fait passer soit le courant (EA) de soutirage d'extrait soit celui du raffinat (RB), selon le cas, d'une position immédiatement antérieure à une position immédiatement postérieure à chacun des volumes morts de la boucle pendant tout le temps que l'extrait ou, selon le cas, le raffinat reste dans la position immédiatement postérieure au volume mort, selon la relation

$$D'_i = D_i \left( 1 + \frac{v}{\varepsilon V} \right) \ ,$$

où $D'_i$ représente le débit corrigé dans la zone i, $D_i$ le débit qui aurait été appliqué si le ou les volumes morts n'avaient pas été pris en compte, v le (ou les) volume mort dont on cherche à corriger les effets, V le volume vide individuel d'un tronçon et de sa connexion vers le tronçon suivant, $\varepsilon$ un coefficient compris entre $\varepsilon b$ et 1, où $\varepsilon b$ est exprimé en fraction volumique d'une colonne ou d'un tronçon de colonne et représente le total des porosités intergrain et de grain dans ladite colonne ou tronçon de colonne et ensuite on diminue le débit de la pompe de recyclage régulée en débit lorsque le soutirage d'extrait ou de raffinat passe de la position immédiatement postérieure au volume mort à la position suivante, de telle façon que ledit débit reprenne la valeur qui aurait été appliquée si chacun des volumes morts avait été négligé.

2. Procédé de séparation en lit mobile simulé, à partir d'une charge (A + B) d'au moins deux constituants, en présence d'au moins un éluant (S), en au moins deux fractions, comportant n colonnes ou tronçons de colonnes chromatographiques montées en série et en boucle fermée, dans lesquelles circule un mélange gazeux sous pression ou un fluide supercritique peu dense, la boucle présentant au moins un courant d'injection de la charge, au moins un courant d'injection de l'éluant, au moins un courant de soutirage d'un extrait (EA) et au moins un courant de soutirage d'un raffinat (RB), le constituant préférentiellement recherché se trouvant en majorité soit dans l'extrait soit dans le raffinat, quatre zones au moins étant déterminées dans lesdites colonnes, chaque zone étant séparée de la suivante par un courant d'injection ou de soutirage, les courants d'injection et de soutirage étant permutés simultanément et à intervalles de temps sensiblement constants, la boucle fermée comportant un compresseur de recyclage dudit mélange, régulé en débit, et situé entre deux colonnes ou tronçons de colonne successifs, éventuellement au moins un moyen de mesure ou d'échantillonnage et éventuellement au moins un compresseur de recyclage régulé en pression, ledit moyen de mesure ou d'échantillonnage et/ou le compresseur de recyclage régulé en pression étant chacun situé entre deux colonnes ou tronçons de colonne consécutifs, lesdits compresseurs, et lesdits moyens de mesure ou d'échantillonnage éventuellement présents, présentant chacun un volume mort dans la boucle de recyclage qui entraîne des perturbations dans la composition de l'extrait et dans celle du raffinat, le procédé étant caractérisé en ce que l'on augmente d'abord d'une valeur appropriée le débit du compresseur de recyclage régulé en débit chaque fois que l'on fait passer soit le courant (EA) de soutirage d'extrait soit celui du raffinat (RB), selon le cas, d'une position immédiatement antérieure à une position immédiatement postérieure à chacun des volumes morts de la boucle pendant tout le temps que l'extrait ou, selon le cas, le raffinat reste dans la position immédiatement postérieure au volume mort, selon la relation

$$D'_i = D_i \left( 1 + \frac{df \ v}{da \, \varepsilon \ V} \right)$$

où D'i, Di, v, V, $\varepsilon$ sont les paramètres de la revendication 1 et où df est la densité de la phase fluide et da la densité de la phase adsorbée et ensuite on diminue le débit du compresseur de recyclage régulé en débit lorsque le soutirage d'extrait ou de raffinat passe de la position immédiatement postérieure au volume mort à la position suivante, de telle façon que ledit débit reprenne la valeur qui aurait été appliquée si chacun des volumes morts avait été négligé.

3. Procédé selon l'une des revendications 1 et 2, dans lequel la ou les pompes ou compresseurs de recyclage, et le moyen de mesure éventuellement présent, sont situés immédiatement en aval de la colonne qui les précède et immédiatement en amont du courant de soutirage d'extrait ou de raffinat en amont de la colonne qui les suit.

4. Procédé selon l'une des revendications 1 et 2, dans lequel la ou les pompes ou compresseurs de recyclage et/ou le moyen de mesure sont situés immédiatement en aval du courant de soutirage d'extrait ou de raffinat de la colonne qui les précède et immédiatement en amont de la colonne qui les suit.

5. Procédé selon l'une des revendications 1 à 4 dans lequel le lit mobile simulé est à contre-courant .

6. Procédé selon l'une des revendications 1 à 4 dans lequel le lit mobile simulé est à co-courant.

7. Procédé selon l'une des revendications 1 à 6 dans lequel la charge comprend un mélange d'hydrocarbures aromatiques comportant 8 atomes de carbone

**Claims**

1. A process for the simulated moving bed separation of a feed (A+B) containing at least two constituents in the presence of at least one eluent (S) into at least two fractions, comprising n chromatographic columns or column sections mounted in series and in a closed circuit, in which a liquid or supercritical mixture circulates, the circuit having at least one feed injection stream, at least one eluent injection stream, at least one extract extraction stream (EA) and at least one raffinate extraction stream (RB), the desired constituent being either mainly in the extract or mainly in the raffinate, at least four zones being determined in said columns, each zone being separated from the following zone by an injection or extraction stream, the injection and extraction streams being simultaneously shifted at substantially constant time intervals, the closed circuit comprising a recycling pump for said mixture, which is flow rate regulated and located between two successive columns or column sections, optionally at least one measuring or sampling means and optionally at least one recycling pump which is pressure regulated, said measuring or sampling means and/or the pressure regulated recycling pump (P) each being located between two consecutive columns or column sections, said pumps and said measuring or sampling means optionally present each having a dead volume in the recycling circuit which causes perturbations in the extract and in the raffinate composition, the process being characterised in that, each time an extract extraction stream (EA) or that of the raffinate (RB) passes from an immediately anterior position to an immediately posterior position to each of the dead volumes in the circuit, the flow rate of the flow rate regulated recycling pump is increased by an appropriate value for the time during which the extract or the raffinate remains in the immediately posterior position to the dead volume, said value being in accordance with the relationship

$$D'_i = D_i[1 + \frac{v}{\varepsilon V}]$$

where $D'_i$ is the corrected flow rate in zone i, $D_i$ is the flow rate which would have been applied if the dead volume (s) were not taken into account, v is the dead volume(s) whose effects are to be corrected, V is the individual void volume of a section and its connection to the following section, $\varepsilon$ is a coefficient between $\varepsilon b$ and 1, where $\varepsilon b$ is expressed as the fractional volume of a column or column section and represents the total intergrain and grain porosities in said column or column section; and then when the stream of the extract or of the raffinate passes from the immediately posterior position to the dead volume to the following position, the flow rate of the flow rate regulated recycling pump is reduced so that said flow rate regains the value which would have been applied if each of the dead volumes had been ignored.

2. A process for the simulated moving bed separation of a feed containing at least two constituents in the presence of at least one eluent into at least two fractions, comprising n chromatographic columns or column sections mounted in series and in a closed circuit, in which a less dense supercritical fluid or pressurised gaseous mixture circulates, the circuit having at least one feed injection stream, at least one eluent injection stream, at least one extract extraction stream (EA) and at least one raffinate extraction stream (RB), the desired constituent being either mainly in the extract or mainly in the raffinate, at least four zones being determined in said columns, each zone being separated from the following zone by an injection or extraction stream, the injection and extraction streams being simultaneously shifted at substantially constant time intervals, the closed circuit comprising a recycling compressor for said mixture, which is flow rate regulated and located between two successive columns or column sections, optionally at least one measuring or sampling means and optionally at least one recycling compressor which is pressure regulated, said measuring or sampling means and/or the pressure regulated recycling compressor each being located between two consecutive columns or column sections, said compressor and said measuring or sampling means optionally present each having a dead volume in the recycling circuit which causes perturbations in the extract and in the raffinate composition, the process being characterised in that, each time an extract extraction stream (EA) or that of the raffinate (RB) passes from an immediately anterior position to an immediately posterior position to each of the dead volumes in the circuit, the flow rate of the flow rate regulated recycling compressor is increased by an appropriate value for the time during which the extract or the raffinate remains in the immediately posterior position to the dead volume, said value being in accordance with the relationship

$$D'_i = D_i[1 + \frac{d_f v}{d_a \varepsilon V}]$$

where $D'_i$, $D_i$, $v$, $V$ and $\varepsilon$ are the parameters of claim 1 and where $d_f$ is the density of the fluid phase and $d_a$ is the density of the adsorbed phase; and then when the stream of the extract or of the raffinate passes from the immediately posterior position to the dead volume to the following position, the flow rate of the flow rate regulated recycling compressor is reduced so that said flow rate regains the value which would have been applied if the dead volumes had been ignored.

3. A process according to any one of claims I and 2, in which the recycling pump(s) or compressor(s) and the optionally present measuring means are located immediately downstream of the column preceding them and immediately upstream of the extract or raffinate extraction stream upstream of the column following them.

4. A process according to any one of claims 1 and 2, in which the recycling pump(s) or compressor(s) and/or the measuring means are located immediately downstream of the extract or raffinate extraction stream downstream of the column preceding them and immediately upstream of the column following them.

5. A process according to any one of claims I to 4, in which the simulated moving bed is in counter-current mode.

6. A process according to any one of claims 1 to 4, in which the simulated moving bed is in co-current mode.

7. A process according to any one of claims 1 to 6, in which the feed comprises a mixture of aromatic hydrocarbons containing 8 carbon atoms.

**Patentansprüche**

1. Verfahren zum Trennen, im simulierten beweglichen Bett, ausgehend von einer Charge (A + B) wenigstens zweier Bestandteile, in Anwesenheit wenigstens eines Eluierungsmittels (S) in wenigstens zwei Fraktionen, n chromatografische Kolonnen oder Kolonnenabschnitte umfassend, die in Reihe und in geschlossener Schleife angeordnet sind, in welchen ein flüssiges oder überkritisches Gemisch zirkuliert, wobei die Schleife wenigstens einen Injektionsstrom für die Charge, wenigstens einen Injektionsstrom für das Eluierungsmittel, wenigstens einen Strom zum Abzug eines Extraktes (EA) und wenigstens einen Strom zum Abzug eines Raffinates (RB) aufweist, wobei der bevorzugte Bestandteil sich überwiegend entweder im Extrakt oder im Raffinat befindet, vier Zonen wenigstens in diesen Kolonnen bestimmt sind, wobei jede Zone gegen die folgenden durch einen Injektions- oder Abzugsstrom getrennt ist und die Injektions- und Abzugsströme gleichzeitig und in im wesentlichen konstanten Zeitintervallen permutiert sind und die geschlossene Schleife eine mengengeregelte Reziklierungspumpe für dieses Gemisch umfaßt, welche zwischen zwei aufeinander folgenden Kolonnen oder Kolonnenabschnitten angeordnet ist, gegebenfalls wenigstens ein Meß- oder Probenahmemittel und gegebenenfalls eine druckgesteuerte Reziklierungspumpe, wobei dieses Meß- oder Probenahmemittel und/oder die Pumpe (P) der druckgesteuerten Rezyklierung je zwischen zwei aufaneinander folgenden Kolonnen oder Kolonnenabschnitten angeordnet ist, diese Pumpen und diese gegebenenfalls vorhandenen Meß- oder Probenahmemittel je ein Totvolumen in der Reziklierungsschleife aufweisen, welches Störungen in der Zusammensetzung des Extrakts und in der des Raffinats herbeiführt, dadurch gekennzeichnet, daß man zunächst den Durchsatz der mengengesteuerten Reziklierungspumpe jedesmal dann erhöht, wenn man entweder den Abzugsstrom (EA) für das Extrakt oder den für das Raffinat (RB) je nach Fall von einer Position unmittelbar vor einer Position, die sich unmittelbar hinter der jedes Totvolumens der Schleife während der gesamten Zeit, wo das Extrakt oder gegebenenfalls das Raffinat in der Position unmittelbar hinter dem Totvolumen bleibt, übergehen läßt entsprechend der Gleichung

$$D'j = Dj \left[ 1 + \frac{v}{\epsilon V} \right]$$

wo D'j die in der Zone i, Di korrigierte Menge, Dj die Menge darstellt, die man angewendet hätte wenn das Totvolumen oder die Totvolumina nicht berücksichtigt worden wären, V das Totvolumen oder die Totvolumina sind, dessen Effekte man zu korrigieren sucht, V das individuelle Hohlvolumen eines Abschnitts und seiner Verbindung zum folgenden Abschnitt ist, ε ein Koeffizient zwischen εb und 1 ist, wo εb als Volumenfraktion einer Kolonne oder eines Kolonnenabschnitts ausgedrückt ist und die Gesamtheit der Zwischenkornporositäten und des Korns in dieser Kolonne oder diesem Kolonnenabschnitt darstellt und anschließend man den Durchsatz der mengengesteuerten Rezirkulierungspumpe vermindert, wenn der Abzug des Extrakts oder Raffinats aus der Position unmittelbar hinter dem Totvolumen in die folgende Position derart übergeht, daß die Menge den Wert wieder annimmt, mit dem sie beaufschlagt worden wäre, wenn jedes der Totvolumina vernachlässigt worden wäre.

2. Verfahren zum Trennen im simulierten beweglichen Bett, ausgehend von einer Charge (A + B) aus wenigstens zwei Bestandteilen, in Anwesenheit wenigstens eines Eluierungsmittels (S) in wenigstens zwei Fraktionen, n chromatografische Kolonnen oder Kolonnenabschnitte umfassend, die in Reihe und in geschlossener Schleife angeordnet sind, in welchen ein gasförmiges Gemisch unter Druck oder ein wenig dichtes superkritisches Fluid zirkuliert, wobei die Schleife wenigstens einen Injektionsstrom der Charge, wenigstens einen Injektionstrom des Eluierungsmittels, wenigstens einen Abzugsstrom eines Extrakts (EA) und wenigstens einen Abzugsstrom für ein Raffinat (RB) aufweist und der bevorzugte gesuchte Bestandteil sich zum überwiegenden Teil entweder im Extrakt oder im Raffinat befindet, wobei vier Zonen wenigstens in diesen Kolonnen bestimmt sind und jede Zone von der folgenden durch einen Injektions- oder Abzugsstrom getrennt ist, wobei die Injektions- und Abzugsströme gleichzeitig und in im wesentlichen konstanten Zeitintervallen permutiert werden, die geschlossene Schleife einen mengengesteuerten Rezirkulierungskompressor für dieses Gemisch umfaßt, der zwischen zwei Kolonnen oder aufeinanderfolgenden Kolonnenabschnitten angeordnet ist, gegebenenfalls wenigstens ein Meß- oder Probenahmemittel und gegebenenfalls wenigstens ein druckgesteuerter Rezirkulierungskompressor, wobei dieses Meß- oder Probenahmemittel und/oder der druckgesteuerte Rezirkulierungskompressor je zwischen zwei aufeinanderfolgenden Kolonnen oder Kolonnenabschnitten angeordnet sind, die Kompressoren und die gegebenefalls vorgesehenen Meß- und Probenahmemittel je ein Totvolumen in der Rezirkulierungsschleife aufweisen, welches Störungen in der Zusammensetzung des Extrakts und in der des Raffinats mit sich bringt, dadurch gekennzeichnet, daß man zunächst um einen geeigneten Wert die Menge des mengengesteuerten Rezirkulierungskompressor jeweils dann erhöht, wenn man entweder den Abzugsstrom für das Extrakt (EA) oder den des Raffinats (RB) je nach Fall von einer Position unmittelbar vor zu einer Position unmittelbar hinter einem der Totvolumina der Schleife während der gesamten Zeit übergehen läßt, wo das Extrakt oder je nach Fall das Raffinat in der Position unmittelbar hinter dem Totvolumen bleibt, und zwar entsprechend der Beziehung

$$D'j = Dj \left[ 1 + \frac{df \; v}{da\epsilon \; V} \right]$$

wo D'i, Di, v, V, ε die Parameter gemäß Anspruch 1 sind und wo df die Dichte die fluiden Phase und da die Dichte der adsorbierten Phase ist und daß man anschließend den Durchsatz des mengengesteuerten Rezirkulierungskompressors vermindert, wenn das Abziehen des Extrakts oder des Raffinats aus der Position unmittelbar hinter dem Totvolumen zu folgenden Position derart übergeht, daß diese Menge den Wert annimmt, der angewendet würde, wenn jedes der Totvolumina vernachlässigt worden wäre.

3. Verfahren nach einem der Ansprüche 1 und 2, bei dem der oder die Rezirkulierungspumpen oder -kompressoren sowie das gegebenenfalls vorhandene Meßmittel unmittelbar hinter der Kolonne angeordnet sind, de ihnen unmittelbar vorangeht und unmittelbar vor dem Abzugsstrom des Extrakts oder des Raffinats vor der Kolonne, die ihnen folgt.

4. Verfahren nach einem der Ansprüche 1 und 2, bei dem der oder die Rezirkulierungspumpen oder -kompressoren

und/oder das Meßmittel unmittelbar hinter dem Abzugsstrom für den Extrakt oder das Raffinat der Kolonne die ihnen vorhergeht und unmittelbar vor der Kolonne, die ihnen folgt, angeordnet sind.

5. Verfahren nach einem der Ansprüche 1 bis 4, bei dem das simulierte bewegliche Bett vom Typ mit Gegestrom ist.

6. Verfahren nach einem der Ansprüche 1 bis 4, bei dem das simulierte bewegliche Bett vom Gleichstromtyp ist.

7. Verfahren nach einem der Ansprüche 1 bis 6, bei dem die Charge ein Gemisch aus aromatischen Kohlenwasserstoffen mit acht Kohlenstoffatomen umfaßt.

## FIG.1

FIG.2A

FIG.2B

FIG.2C

## FIG.3

## FIG.4

FIG.5

FIG.6